(19) Europäisches Patentamt
European Patent Office
Office européen des brevets

(11) **EP 4 567 342 A1**

(12) **EUROPEAN PATENT APPLICATION**
published in accordance with Art. 153(4) EPC

(43) Date of publication:
**11.06.2025  Bulletin 2025/24**

(21) Application number: **23853966.2**

(22) Date of filing: **08.05.2023**

(51) International Patent Classification (IPC):
*F24F 11/84* (2018.01)    *F24F 11/64* (2018.01)
*F24F 11/61* (2018.01)    *F24F 11/74* (2018.01)
*F24F 11/89* (2018.01)    *F24F 110/20* (2018.01)
*F24F 110/10* (2018.01)    *F24F 140/20* (2018.01)

(52) Cooperative Patent Classification (CPC):
Y02B 30/70

(86) International application number:
**PCT/CN2023/092765**

(87) International publication number:
**WO 2024/037059 (22.02.2024 Gazette 2024/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **17.08.2022  CN 202210987656**

(71) Applicant: **GD Midea Air-Conditioning Equipment Co., Ltd.
Foshan, Guangdong 528311 (CN)**

(72) Inventors:
• **TAO, Kui
Foshan, Guangdong 528311 (CN)**

• **LI, Shunquan
Foshan, Guangdong 528311 (CN)**
• **WANG, Zhengxing
Foshan, Guangdong 528311 (CN)**
• **LIU, Ji
Foshan, Guangdong 528311 (CN)**
• **HUANG, Zhigang
Foshan, Guangdong 528311 (CN)**
• **CHEN, Sheng
Foshan, Guangdong 528311 (CN)**
• **SONG, Lei
Foshan, Guangdong 528311 (CN)**

(74) Representative: **Ran, Handong et al
Maucher Jenkins
Seventh Floor Offices
Artillery House
11-19 Artillery Row
London SW1P 1RT (GB)**

(54) **MULTI-SPLIT AIR CONDITIONING SYSTEM CONTROL METHOD, CONTROLLER, AIR CONDITIONING SYSTEM, AND MEDIUM**

(57)    A multi-split air conditioning system control method, a controller, an air conditioning system, and a medium. The multi-split air conditioning system comprises at least one target indoor unit having a wind sensing mode on. The control method comprises: when a preset condition is met, determining a degree of excess heat of the target indoor unit according to a temperature characteristic value of an evaporator coil of the target indoor unit, an evaporation outlet temperature value of the target indoor unit, and a wind sensing correction coefficient, then regulating a degree of openness of a throttle element of the target indoor unit according to the first degree of excess heat; when the preset condition is not met, determining a second degree of excess heat of the target indoor unit according to the temperature characteristic value of the evaporator coil of the target indoor unit and the evaporation outlet temperature value of the target indoor unit, and regulating the degree of openness of the throttle element of the target indoor unit according to the second degree of excess heat.

EP 4 567 342 A1

During startup or operation of the multi-split air conditioning system

S100

When a preset condition is met, determine a first degree of superheat of the target indoor unit according to a temperature characteristic value of an evaporator coil of the target indoor unit, an evaporation outlet temperature value of the target indoor unit, and an air blowing correction coefficient, and adjust an opening degree of a throttling element of the target indoor unit according to the first degree of superheat

When the preset condition is not met, determine a second degree of superheat of the target indoor unit according to the temperature characteristic value of the evaporator coil of the target indoor unit and the evaporation outlet temperature value of the target indoor unit, and adjust the opening degree of the throttling element of the target indoor unit according to the second degree of superheat

S200

FIG. 2

**Description**

**CROSS-REFERENCE TO RELATED APPLICATION**

This application claims priority to Chinese Patent Application No. 202210987656.1, filed on August 17, 2022 and entitled "MULTI-SPLIT AIR CONDITIONING SYSTEM CONTROL METHOD, CONTROLLER, AIR CONDITIONING SYSTEM, AND MEDIUM", the entire contents of which are incorporated herein by reference.

**TECHNICAL FIELD**

The present invention relates to the technical field of air conditioners, and in particular, to a method for controlling a multi-split air conditioning system, a controller, an air conditioning system, and a medium.

**BACKGROUND**

A multi-piping multi-split air conditioning system includes an outdoor unit and a plurality of indoor units each connected to the outdoor unit by a separate piping. In practice, different indoor units may be in different operational modes during operation. For example, a regular cooling mode of one indoor unit is turned on, and a breezeless, gentle breeze, or anti-direct blowing mode of another indoor unit is turned on. In this case, to ensure the cooling effect, the compressor of the air conditioner is controlled according to the logic of the regular cooling mode, which is likely to cause problems such as low outlet air temperature and dewing of the indoor unit in the breezeless, gentle breeze, or anti-direct blowing mode.
While various control methods for single-split air conditioning systems, such as breezeless, gentle breeze, or anti-direct blowing modes, are relatively mature, they cannot be directly applied to multi-split air conditioning systems. For multi-split systems, when indoor units operate respectively in various operational modes, the control logics become complicated. Furthermore, there are differences in the refrigerant pipeline structure between a multi-split system and a single-split system. Therefore, how to control each indoor unit individually is an urgent issue that needs to be addressed.

**SUMMARY**

Embodiments of the present invention provides a method for controlling a multi-split air conditioning system, a controller, an air conditioning system, and a medium, to control the degrees of superheat of indoor units according to operational statuses of the indoor units to meet the personalized air blowing requirements of different users.
In accordance with a first aspect of the present invention, an embodiment provides a method for controlling a multi-split air conditioning system, where the multi-split air conditioning system includes at least one target indoor unit with an air blowing mode turned on. The method includes:

determining, in response to a preset condition being met, a first degree of superheat of the target indoor unit according to a temperature characteristic value of an evaporator coil of the target indoor unit, an evaporation outlet temperature value of the target indoor unit, and an air blowing correction coefficient, and adjusting an opening degree of a throttling element of the target indoor unit according to the first degree of superheat; and

determining, in response to the preset condition being not met, a second degree of superheat of the target indoor unit according to the temperature characteristic value of the evaporator coil of the target indoor unit and the evaporation outlet temperature value of the target indoor unit, and adjusting the opening degree of the throttling element of the target indoor unit according to the second degree of superheat,

where the air blowing correction coefficient is related to the air blowing mode of the target indoor unit, and a temperature measurement point corresponding to the evaporation outlet temperature value is located on an outdoor unit side; and the preset condition includes: a compressor of the multi-split air conditioning system has continuously operated for longer than a first preset time, the compressor has continuously been in a stable state for longer than a second preset time, and the temperature characteristic value of the target indoor unit is less than a target evaporation temperature of the target indoor unit.

The method for controlling a multi-split air conditioning system according to the embodiment of the first aspect of the present invention at least has the following beneficial effects. The degree of superheat of the target indoor unit with the air blowing mode turned on is controlled through two stages. In a first stage, the preset condition is not met. The first stage is an early stage of start-up of the multi-split air conditioning system, during which the multi-split air conditioning system has not reached a stable operating state. In the first stage, the opening degree of the throttling element is controlled according to the temperature characteristic value of the evaporator coil of the target indoor unit and the evaporation outlet temperature value. In a second stage, the preset condition is met, and the multi-split air conditioning system is in a stable operating state. In the second stage, the opening degree of the throttling element is controlled according to the temperature characteristic value, the evaporation outlet temperature value, and an air blowing correction parameter corresponding to the air blowing mode of the target indoor unit. The evaporation outlet temperature value is introduced as a parameter for controlling the opening degree, and the problem of deviation of the degree of superheat due to a long connecting pipe between the target indoor unit and the outdoor unit is considered. In addition, because the preset condition includes a judgment on the time for which the compressor has continuously operated, a judgment on the time for which the compressor has continuously been in a stable state, and a judgment on the evaporation temperature of the target indoor unit, an expansion valve of the target indoor unit can be separately controlled by comprehensively considering the operational status of the indoor unit and the operational status of the compressor, such that the multi-split air conditioning system can execute a precise control strategy even when the indoor units are respectively operating in a plurality of different modes, thereby improving user experience.

In some embodiments, a first temperature sensor is arranged at a refrigerant pipeline between an evaporator of the target indoor unit and an air inlet of the compressor, and the first temperature sensor is located on the outdoor unit side to serve as a temperature measurement point to measure the evaporation outlet temperature value.

In some embodiments, the compressor being in the stable state includes at least one of:

a frequency fluctuation amplitude of the compressor being less than a preset amplitude; and

an average value of temperature characteristic values of all indoor units having a capacity requirement being greater than the target evaporation temperature of the target indoor unit.

In some embodiments, the first degree of superheat is obtained in the following manner:

acquiring the evaporation outlet temperature value of the target indoor unit, the temperature characteristic value of the evaporator coil of the target indoor unit, and an indoor humidity detected by the target indoor unit;

determining the air blowing correction coefficient according to the indoor humidity and the air blowing mode of the target indoor unit;

determining the first degree of superheat according to the air blowing correction coefficient, the evaporation outlet temperature value, the temperature characteristic value, a valve diameter of the throttling element of the target indoor unit, and a pipe length between the target indoor unit and the outdoor unit.

In some embodiments, the second degree of superheat is obtained in the following manner:

acquiring the evaporation outlet temperature value of the target indoor unit and the temperature characteristic value of the evaporator coil of the target indoor unit;

determining the second degree of superheat according to the evaporation outlet temperature value, the temperature characteristic value, a valve diameter of the throttling element of the target indoor unit, and a pipe length between the target indoor unit and the outdoor unit.

In some embodiments, adjusting an opening degree of a throttling element of the target indoor unit according to the first degree of superheat includes:

determining an opening degree correction coefficient according to a current opening degree of the throttling element of the target indoor unit;

determining a first opening value as a current opening degree of the throttling element according to the first degree of superheat and the opening degree correction coefficient;

maintaining the current opening degree of the throttling element for a preset duration.

In some embodiments, adjusting the opening degree of the throttling element of the target indoor unit according to the second degree of superheat includes:

determining an opening degree correction coefficient according to a current opening degree of the throttling element of the target indoor unit;

determining a second opening value as a current opening degree of the throttling element according to the second degree of superheat and the opening degree correction coefficient;

maintaining the current opening degree of the throttling element for a preset duration.

In some embodiments, a second temperature sensor is arranged in a middle portion of an evaporator of the target indoor unit, and the second temperature sensor serves as a temperature measurement point to measure the temperature characteristic value.

In some embodiments, the target evaporation temperature is determined according to a dew point temperature corresponding to the target indoor unit, an evaporation temperature correction coefficient, and the air blowing mode of the target indoor unit; and the dew point temperature is related to an indoor humidity detected by the target indoor unit and an indoor temperature.

In some embodiments, whether each indoor unit satisfies the preset condition is re-detected based on a preset time interval.

In accordance with a second aspect of the present invention, an embodiment provides a controller, including a memory, a processor, and a computer program stored in the memory and executable by the processor, where the computer program, when executed by the processor, causes the processor to implement the method in accordance with the first aspect.

In accordance with a third aspect of the present invention, an embodiment provides a multi-split air conditioning system, including the controller in accordance with the second aspect.

In accordance with a fourth aspect of the present invention, an embodiment provides a computer-readable storage medium, storing a computer-executable instruction which, when executed by a processor, causes the processor to implement the method in accordance with the first aspect.

Additional features and advantages of the invention will be set forth in the following description, and in part will be obvious from the description, or may be learned by the practice of the invention. The objects and other advantages of the present invention can be realized and obtained by the structures particularly pointed out in the description, claims and drawings.

## BRIEF DESCRIPTION OF DRAWINGS

FIG. 1 is a schematic structural diagram showing the connection between components of a multi-split air conditioning system according to an embodiment of the present invention;

FIG. 2 is an overall flowchart of a method for controlling a multi-split air conditioning system according to an embodiment of the present invention;

FIG. 3 is a flowchart of calculating a first degree of superheat according to an embodiment of the present invention;

FIG. 4 is a flowchart of calculating a second degree of superheat according to an embodiment of the present invention;

FIG. 5 is a flowchart of adjusting an opening degree of a throttling element according to the first degree of superheat according to an embodiment of the present invention;

FIG. 6 is a flowchart of adjusting an opening degree of a throttling element according to the second degree of superheat according to an embodiment of the present invention; and

FIG. 7 is a structural connection diagram of a controller according to an embodiment of the present invention.

## DETAILED DESCRIPTION

To make the objects, technical schemes, and advantages of the present invention clear, the present invention is described in further detail in conjunction with accompanying drawings and embodiments. It should be understood that the embodiments described herein are merely used to illustrate the present invention, and are not intended to limit the present invention. In addition, the features, operations, or characteristics described in the description may be combined in any suitable manner to form various embodiments. Moreover, the order of steps or operations in the description of the method may be changed or adjusted in a manner apparent to those having ordinary skills in the art. Therefore, the orders in the description and drawings are merely for the purpose of clearly describing a particular embodiment, and are not meant to be necessary orders unless otherwise specified that a particular order must be followed.

In the description of the present invention, the term "at least one" means one or more, the term "plurality of" (or multiple) means at least two, the term such as "greater than", "less than", "exceed" or variants thereof prior to a number or series of numbers is understood to not include the number adjacent to the term. The term "above", "below", "within" or variants thereof prior to a number or series of numbers is understood to include the number adjacent to the term. If used herein, the terms such as "first", "second" and the like are merely used for distinguishing technical features, and are not intended to indicate or imply relative importance, or implicitly point out the number of the indicated technical features, or implicitly point out the order of the indicated technical features.

The serial numbers assigned herein to components, such as "first", "second" and the like are merely used to distinguish the described objects and do not have any sequential or technical meaning. The terms such as "connect", "couple", and their variants in the present invention include direct and indirect connection (coupling) unless otherwise specified.

As users have higher requirements for quality of life, higher requirements are posed on the comfort of air-conditioning products. Single-split air conditioners such as wall-mounted air conditioners and cabinet air conditioners have been provided with air blowing modes with better comfort (including subdivision modes such as breezeless, gentle breeze, and anti-direct blowing modes). It is also necessary to improve user experience for multi-piping multi-split air conditioners. However, multi-piping multi-split air conditioning systems are different from single-split air conditioning systems. A multi-piping multi-split air conditioning system includes an outdoor unit and a plurality of indoor units each connected to the outdoor unit by a separate piping. A change of the operational status of an indoor unit will affect the operational status of the outdoor unit, which in turn affects the operational statuses of all indoor units that are operating.

Compared with the control of air blowing modes of single-split air conditioning systems such as wall-mounted air conditioners and cabinet air conditioners, the control of the air blowing modes of multi-piping multi-split air conditioning systems is more likely to have the risk of dewing and low outlet air temperature. To solve these problems, it is necessary to control the air blowing modes of the multi-split air conditioning system from the perspective of the entire air conditioning system.

The problems are determined by the characteristics of multi-piping multi-split air conditioning systems.

First, the outdoor unit of the multi-split air conditioning system is used in combination with a plurality of indoor units. When a small number of indoor units, e.g., one or two indoor units, are turned on, the minimum load of the outdoor unit is still too large for the load needed by these indoor units. Especially when the indoor unit operates in the breezeless mode, the fan speed of the indoor unit is relatively low, the load of the indoor unit is further reduced, and the outlet air temperature of the indoor unit is relatively low.

Second, the operation of the outdoor unit will affect the operational statuses of all indoor units, so when the operational status of the outdoor unit changes, the indoor units need to perform self-adjustment to reduce the impact. For example, when one indoor unit is operating in the cooling mode and another indoor unit is operating in the breezeless mode, the frequency of the outdoor unit will be changed in order to ensure the cooling effect. If distribution of refrigerant is not performed for the indoor units, the outlet air temperature of the indoor unit in the breezeless mode will be significantly lower than that of the indoor unit in the cooling mode. When all indoor units are operating in the breezeless mode, the operating statuses of all the indoor units should be considered, and reliability should be ensured first.

Third, different air blowing modes of indoor units (anti-direct blowing, gentle breeze, and breezeless modes) have different requirements on the cooling capacity output, and the requirements of the anti-direct blowing, gentle breeze, and breezeless modes on the cooling capacity output are in a descending order. In addition, indoor units with different deflector angles have different anti-dewing requirements, and therefore need to be controlled to have different outlet air temperatures.

The indoor units may operate in different modes. To meet a personalized air blowing requirement of a user, the multi-piping multi-split air conditioning system needs to provide an appropriate temperature and a comfortable air blowing effect while avoiding dewing, so a high evaporation temperature is desired. To meet a regular refrigeration requirement of a user, the multi-piping multi-split air conditioning system needs to provide an appropriate temperature and rapid cooling, so a low evaporation temperature is desired. When there is an indoor unit operating in the cooling mode and an indoor unit operating in an air blowing mode in the multi-piping multi-split air conditioning system, the control method for single-split air conditioning systems cannot be applied to the multi-piping multi-split air conditioning system.

Therefore, embodiments of the present invention provide a method for controlling a multi-split air conditioning system, a controller, an air conditioning system, and a medium. According to the method, an operational status of the multi-split air conditioning system is determined according to a preset condition, and a degree of superheat of a target indoor unit is controlled according to the operational status, such that the target indoor unit can meet the personalized air blowing requirement of the user, while stable operation of the multi-split air conditioning system is ensured.

The present invention will be further described below in conjunction with the accompanying drawings.

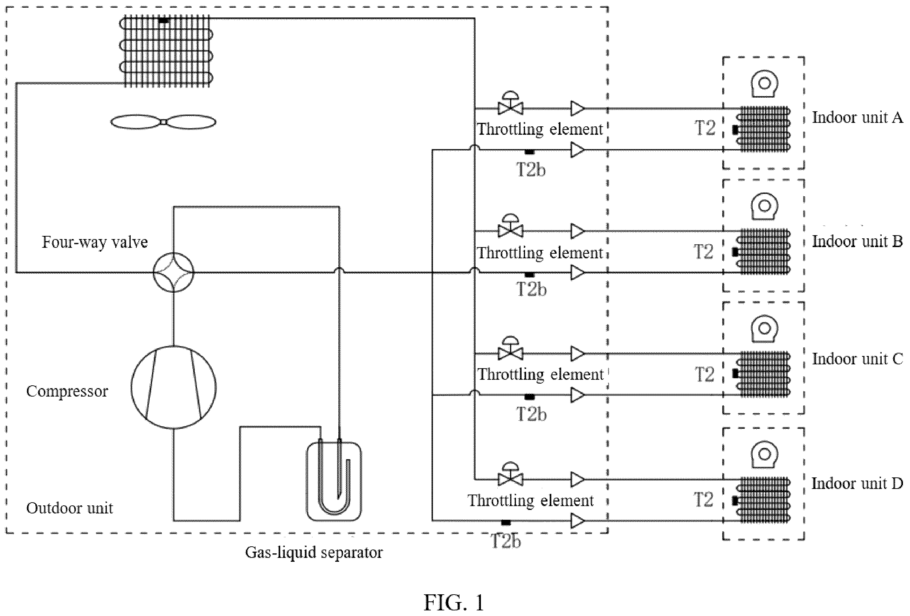

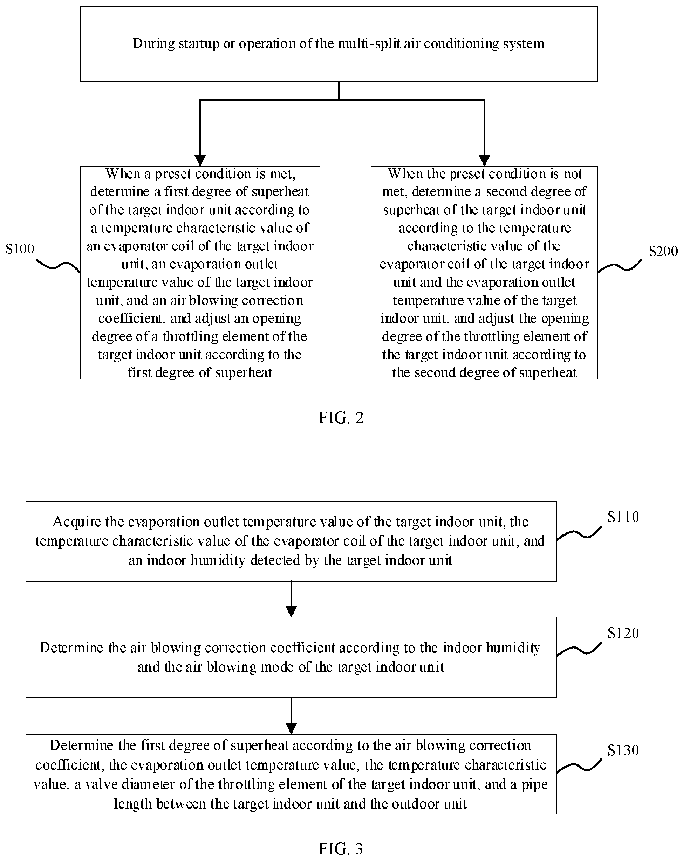

Referring to FIG. 1 and FIG. 2, an embodiment of the present invention provides a method for controlling a multi-split air conditioning system. The multi-split air conditioning system includes at least one target indoor unit with an air blowing mode turned on. The method includes the following steps.

In a step of S100, when a preset condition is met, a first degree of superheat of the target indoor unit is determined according to a temperature characteristic value of an evaporator coil of the target indoor unit, an evaporation outlet temperature value of the target indoor unit, and an air blowing correction coefficient, and an opening degree of a throttling element of the target indoor unit is adjusted according to the first degree of superheat.

In a step of S200, when the preset condition is not met, a second degree of superheat of the target indoor unit is determined according to the temperature characteristic value of the evaporator coil of the target indoor unit and the evaporation outlet temperature value of the target indoor unit, and the opening degree of the throttling element of the target indoor unit is adjusted according to the second degree of superheat.

The air blowing correction coefficient is related to the air blowing mode of the target indoor unit, and a temperature measurement point corresponding to the evaporation outlet temperature value is located on an outdoor unit side. The preset condition includes: a compressor of the multi-split air conditioning system has continuously operated for longer than a first preset time, the compressor has continuously been in a stable state for longer than a second preset time, and the temperature characteristic value of the target indoor unit is less than a target evaporation temperature of the target indoor unit.

First, it should be noted that the multi-split air-conditioning system mentioned in the present invention refers to a multi-piping multi-split system. Each indoor unit is connected to the outdoor unit through its own piping (refrigerant pipeline). A refrigerant is converged in the outdoor unit and inputted into an air inlet of the compressor. Then, the refrigerant is outputted from an exhaust outlet of the compressor and distributed at the outdoor unit to the indoor units. For convenience of description, the term "multi-split air conditioning system" is used below to represent the multi-piping multi-split air conditioning system. In addition, the air blowing mode mentioned in the present invention is an operation mode in which the indoor unit reduces the amount of air blown directly to the user, and includes, but not limited to, breezeless, gentle breeze, and anti-direct blowing functions commonly seen in conventional air conditioners. Therefore, the air blowing mode is a general term for these functional modes, and is put forward in consideration of distinguishing of differences between cooling capacity output requirements of the breezeless, gentle breeze, and anti-direct blowing functions in the following description.

In the multi-split air conditioning system, a plurality of indoor units are used in combination with one outdoor unit. During operation of the plurality of indoor units, different indoor units may operate in different modes. For example, an indoor unit is operating in the breezeless mode, another indoor unit is operating in the anti-direct blowing mode, and yet another indoor unit is operating in the regular cooling mode. Because the indoor units in different modes have different operational statuses, how to enable the indoor units to operate in their respective operation modes while cooperating with the outdoor unit is an issue that affects the stability of the multi-split air conditioning system and user experience. In a conventional single-split air conditioning system, when an air blowing mode of the indoor unit is turned on, the outdoor unit can adjust its operational status according to a requirement of the indoor unit. The pipe length between the outdoor unit and the indoor unit is fixed, so the control is relatively easy. However, due to the inconsistent pipe lengths between the indoor units and the outdoor unit in the multi-split air conditioning system, parameters such as the evaporation outlet temperature that are measured by the control method for single-split air conditioning systems cannot be directly applied to the multi-split air conditioning system. In an embodiment of the present invention, the deviation of the degree of superheat due to an excessively long refrigerant pipeline between the indoor unit and the outdoor unit is considered, the degree of superheat is controlled according to the operational status of the compressor and different operational statuses of the indoor units, and the opening degree of the throttling element of the indoor unit can be adjusted according to the magnitude of the degree of superheat. As such, the multi-split air conditioning system can respectively adjust the operational status of each indoor unit, enabling different indoor units to meet the corresponding personalized requirements from users. For example, when the preset condition is not met, i.e., at an early stage of start-up of the multi-split air conditioning system, the multi-split air conditioning system has not reached a stable operating state. In this case, the opening degree of the throttling element is controlled according to the temperature characteristic value of the evaporator coil of the target indoor unit and the evaporation outlet temperature value. When the preset condition is met, i.e., when the multi-split air conditioning system is in a stable operating state, the opening degree of the throttling element is controlled according to the temperature characteristic value, the evaporation outlet temperature value, and an air blowing correction parameter corresponding to the air blowing mode of the target indoor unit. In short, according to the air blowing mode of the target indoor unit and the corresponding operating parameters (e.g., evaporation outlet temperature, etc.), the opening degree of the throttling element of the target indoor unit is adjusted to realize the cooperation between the outdoor unit and the indoor units, thereby improving user experience.

For the convenience of description of temperature measurement points for measuring the temperature parameters, reference is made to FIG. 1 which is a schematic structural diagram showing the connection between components of the multi-split air conditioning system. An air outlet of the compressor is connected to a condenser of the outdoor unit through a four-way valve. An outlet of the condenser is respectively connected to a plurality of indoor units (FIG. 1 takes four indoor units as an example: indoor unit A, indoor unit B, indoor unit C, and indoor unit D) through refrigerant pipelines. An independent refrigerant pipeline is arranged between an evaporator inlet of each indoor unit and the outlet of the condenser of the outdoor unit. Each independent refrigerant pipeline is provided with a throttling element. The evaporator outlet of each indoor unit is also connected to an independent refrigerant pipe. After these refrigerant pipelines converge, the refrigerant enters an air-liquid separator through the four-way valve and finally returns to the air inlet of the compressor. To measure the evaporation outlet temperature value, a first temperature sensor is arranged at a refrigerant pipeline between an evaporator outlet of each indoor unit and an air inlet of the compressor (where each of the indoor unit A, the indoor unit B, the indoor unit C, and the indoor unit D corresponds to one first temperature sensor), and the first temperature sensor is located on the outdoor unit side to serve as a temperature measurement point to measure the evaporation outlet temperature value. To measure the temperature characteristic value, a second temperature sensor is arranged in a middle portion of an evaporator of each indoor unit, and the second temperature sensor serves as a temperature measurement point to measure the temperature characteristic value.

For the evaporation outlet temperature value, because the pipe lengths between the indoor units and the outdoor unit are inconsistent, if the temperature value is directly measured at the evaporator outlet of each indoor unit by a conventional method, the temperatures of the refrigerant outputted from the evaporators of different indoor units to the air inlet of the compressor differ greatly, and an inaccurate temperature value will affect the accuracy of control. Therefore, in an embodiment of the present invention, the temperature measurement point for measuring the evaporation outlet temperature value is arranged on the outdoor unit side, to ensure that the temperature values of the refrigerant outputted by the evaporators of different indoor units can be measured at particular positions on the outdoor unit side, thereby avoiding the problem of the deviation of the degree of superheat due to an excessively long refrigerant pipeline between the indoor unit and the outdoor unit, and improving the control accuracy. The temperature characteristic value is used to characterize the temperature of the evaporator of the target indoor unit. In the present invention, a temperature value measured at the middle portion of the evaporator (related to the distribution of the refrigerant pipeline) is used as the temperature characteristic value of the evaporator. The second temperature sensor may also be arranged at other positions on the evaporator to achieve different control effects, which are not limited herein. The target evaporation temperature is related to an indoor dew point temperature of the target indoor unit and the current air blowing mode of the target indoor unit. The air blowing correction coefficient is related to indoor humidity detected by the target indoor unit and the current air blowing mode of the target indoor unit. Method of determining the target evaporation temperature and the air blowing correction coefficient will be described in detail below.

The preset condition is used for determining the operational status of the multi-split air-conditioning system. When the following three conditions are satisfied, it is determined that the multi-split air-conditioning system is operating in a stable state and there is at least one indoor unit operating in an air blowing mode:

① the compressor of the multi-split air conditioning system has continuously operated for longer than a first preset time;

② the compressor has continuously been in a stable state for longer than a second preset time; and

③ the temperature characteristic value of the target indoor unit is less than the target evaporation temperature of the target indoor unit.

When the preset condition is satisfied, indicating that the multi-split air conditioning system is operating in a stable state, the first degree of superheat of the target indoor unit is determined according to the temperature characteristic value of the target indoor unit, the evaporation outlet temperature value of the target indoor unit, and the air blowing correction coefficient. When the preset condition is not satisfied, indicating that the multi-split air conditioning system is at an early stage of start-up or in a state such as operational status switching and has not reached a stable state, the second degree of superheat of the target indoor unit is determined according to the temperature characteristic value of the target indoor unit and the evaporation outlet temperature value of the target indoor unit. The first degree of superheat and the second degree of superheat of the multi-split air conditioning system that are obtained through calculation vary with different operational statuses. Therefore, it can be considered that when the preset condition is not satisfied, the multi-split air conditioning system is controlled according to a first stage of degree-of-superheat control, and when the preset condition is satisfied, the multi-split air conditioning system is controlled according to a second stage of degree-of-superheat control. It can also be considered that after a cold start, the multi-split air conditioning system first performs rapid cooling (i.e., the temperature in the room needs to be lowered before an air blowing mode is entered), then enters the first stage of degree-of-superheat control, and then enters the second stage of degree-of-superheat control.

The first preset time may be 35 minutes and may range from 20 minutes to 60 minutes, and the second preset time may be 5 minutes and may range from 2 minutes to 10 minutes.

The opening degree of the throttling element of the target indoor unit can be controlled according to the first degree of superheat or the second degree of superheat. For example, different degrees of superheat correspond to different values of the opening degree, or different degrees of superheat correspond to different adjustment amounts of the opening degree, or one opening degree adjustment rule is used for the first stage of degree-of-superheat control and another opening degree adjustment rule is used for the second stage of degree-of- superheat control, which is not limited herein. In short, according to the calculated degree of superheat, the opening degree of the throttling element is adjusted to control the evaporator of each target indoor unit to be in a suitable operating range, thus meeting the operation requirements of the current operation mode (regular cooling mode or different air blowing modes) of the target indoor units. As such, the load of the outdoor unit can be distributed to each room as required, to meet the personalized air blowing requirements of users.

It can be understood that the embodiments of the present invention do not involve the control of the fan speed and the deflector of the indoor unit. For the control of the fan speed and the deflector, reference may be made to the control method for single-split air conditioning systems.

The condition ② in the preset conditions, i.e., the compressor being in the stable state, may be expressed as at least one of the following states:

a frequency fluctuation amplitude of the compressor is less than a preset amplitude, which is embodied in that the frequency of the compressor is maintained close to a stable frequency and a fluctuation amplitude of the frequency of the compressor around the stable frequency is less than the preset amplitude, or is embodied in that the frequency of the compressor changes linearly with time and a fluctuation amplitude of the frequency of the compressor around the slope corresponding to the linear change is less than the preset amplitude; and

an average value of temperature characteristic values of all indoor units having a capacity requirement is greater than the target evaporation temperature of the target indoor unit, which is embodied in that the temperature characteristic values of the indoor units having a capacity requirement are collected, an average value of the temperature characteristic values is calculated and is compared with the target evaporation temperature of the target indoor unit, and when the average value is greater than the target evaporation temperature of the target indoor unit, it is determined that the compressor is maintained in the stable state.

It should be noted that the judgment on the frequency fluctuation amplitude of the compressor and the judgment on the target evaporation temperature of the target indoor unit both require a duration of longer than the second preset time, i.e., the frequency fluctuation amplitude of the compressor is less than the preset amplitude throughout the second preset time, or the average value of the temperature characteristic values of all the indoor units having a capacity requirement is greater than the target evaporation temperature of the target indoor unit throughout the second preset time.

The target evaporation temperature of the target indoor unit is determined according to:

a dew point temperature of the target indoor unit, a heat transfer temperature difference correction parameter, and a mode correction parameter corresponding to the air blowing mode. The dew point temperature is determined according to an indoor humidity and an indoor temperature corresponding to the target indoor unit. In an embodiment, the target evaporation temperature may be expressed as:

$$T2\_trg=Td-\Delta T+Ca+Cb$$

where T2 _trg represents the target evaporation temperature of the target indoor unit, Td represents the dew point temperature, Ca represents a correction coefficient corresponding to the gentle breeze mode, and Cb represents a correction coefficient corresponding to the anti-direct blowing mode. The dew point temperature is determined according to the following formula:

$$Td = -35.957 - 1.8726\left(lnH1 + \frac{c8}{T} + c9 + c10 * T + c11 * T^2 + c12 * T^3 + c13 * lnT\right)$$

$$+ 1.1689\left(lnH1 + \frac{c8}{T} + c9 + c10 * T + c11 * T^2 + c12 * T^3 + c13 * lnT\right)^2$$

$$c8 = -5800.2206$$

$$c9 = 1.3914993$$

$$c10 = -0.04860239$$

$$c11 = 0.41764768 * 10^{-4}$$

$$c12 = -0.14452093 * 10^{-7}$$

$$c13 = 6.5459673$$

where H1 represents the indoor humidity detected by the target indoor unit and has a value range of [20%, 90%], T=T1+273.15, and T1 has a value range of [16, 30] °C. ΔT represents a correction coefficient, which may be regarded as a heat transfer temperature difference, has a recommended value of 4°C, and may have a value range of [2, 10] °C. The final calculated Td has a value range of [6, 22] °C. The values of Ca and Cb may be determined with reference to Tables 1 and 2 below.

Table 1. Table of values of correction parameter in gentle breeze mode

| Temperature range | Ca value (recommended value) | Ca value (available range) |
|---|---|---|
| <70% | 0 | / |
| 70% to 80% | -1 | -5 to -1 |
| 80% to 100% | -0.5 | 0.3 to 1.2 |

Table 2. Table of values of correction parameter in anti-direct blowing mode

| Temperature range | Cb value (recommended value) | Cb value (available range) |
|---|---|---|
| <70% | 0 | / |
| 70% to 80% | -2 | -5 to -1 |
| 80% to 100% | -1 | 0.5 to 2 |

It should be noted that the operation mode of the target indoor unit may be determined by a mode flag bit. When a flag bit corresponding to the gentle breeze mode of the target indoor unit is detected and the humidity is greater than 70%, the value in Table 1 above is applied. When the flag bit corresponding to the gentle breeze mode of the target indoor unit is not detected or the humidity is less than 70%, the value of Ca is directly set to zero. When a flag bit corresponding to the anti-direct blowing mode of the target indoor unit is detected and the humidity is greater than 70%, the value in Table 2 above is applied. When the flag bit corresponding to the anti-direct blowing mode of the target indoor unit is not detected or the humidity is less than 70%, Cb is directly set to zero. It can be understood that for any indoor unit, only one mode flag bit can exist at the same time, i.e., the value of at least one of Ca and Cb is set to zero.

It can be understood that the indoor unit may not enter a comfortable air blowing mode immediately after receiving a comfortable air blowing mode instruction set by the user. For example, the indoor unit has just been started and the temperature in the room has not yet dropped. In this case, although the comfortable air blowing mode of the indoor unit has been turned on, the temperature in the room needs to be cooled down first, and then the airflow speed of the indoor unit is reduced to enter the comfortable air blowing mode, to adjust the temperature and humidity and take anti-dewing measures. Therefore, in practice, each indoor unit sends an actual capacity requirement carrying a mode flag bit to the outdoor unit, and the outdoor unit calculates a total capacity requirement according to the actual capacity requirements and determines the mode flag bit of each indoor unit. In this case, the indoor units need to comply with the adjustment performed by the outdoor unit, and even if a room environment in which an indoor unit is located allows the indoor unit to operate in the breezeless mode, the gentle breeze mode, or the anti-direct blowing mode, the indoor unit does not immediately enter the corresponding operation mode. After obtaining the total capacity requirement, the outdoor unit determines an initial frequency of the compressor, acquires operation modes that the indoor units are about to enter respectively, and determines whether each indoor unit can execute the operation mode corresponding to the corresponding mode flag bit. The outdoor unit returns a flag bit corresponding to the mode that can be executed to the corresponding indoor unit, to indicate that the indoor unit is allowed to enter the operation mode corresponding to the mode flag bit. When an indoor unit sends the flag bit corresponding to the anti-direct blowing mode to the outdoor unit, the outdoor unit, after acquiring the mode flag bits of all the indoor units having a refrigeration requirement, determines the initial frequency of the compressor and determines that the indoor unit can perform an anti-direct blowing function, and further returns the flag bit corresponding to the anti-direct blowing mode that can be executed to the indoor unit. The indoor unit receives the flag bit corresponding to the anti-direct blowing mode that can be executed, and executes the anti-direct blowing mode.

It should be noted that, in some cases, the indoor units and the outdoor unit are not originally a complete set. Indoor units of different models have different functions, some indoor units may have new functions, some indoor units may only have the regular cooling function. In some cases, the outdoor unit may not have the function of adjusting the comfortable air blowing mode, the outdoor unit cannot return a flag bit corresponding to an operation mode that can be executed to the indoor unit, even if an indoor unit is equipped with the comfortable air blowing mode, it cannot perform an operation related to the comfortable air blowing mode. As such, comfort and reliability risks are avoided.

Referring to FIG. 3, the first degree of superheat of the target indoor unit is determined by executing the following steps.

In a step of S110, the evaporation outlet temperature value of the target indoor unit, the temperature characteristic value of the evaporator coil of the target indoor unit, and an indoor humidity detected by the target indoor unit are acquired.

In a step of S 120, the air blowing correction coefficient is determined according to the indoor humidity and the air blowing mode of the target indoor unit.

In a step of S 130, the first degree of superheat is obtained according to the air blowing correction coefficient, the evaporation outlet temperature value, the temperature characteristic value, a valve diameter of the throttling element of the target indoor unit, and a pipe length between the target indoor unit and the outdoor unit.

For any target indoor unit, the evaporation outlet temperature value and the temperature characteristic value of the target indoor unit and the indoor humidity detected by the target indoor unit are acquired, the air blowing correction coefficient is determined according to the indoor humidity and the air blowing mode of the target indoor unit, and the first degree of superheat is calculated according to the air blowing correction coefficient, the evaporation outlet temperature value, the temperature characteristic value, the valve diameter of the throttling element, and the pipe length between the target indoor unit and the outdoor unit. For example, the first degree of superheat may be calculated according to the following formula:

$$Ts1=T2b-T2+C1+C2-SH$$

$$SH=H2+Ca+Cb$$

where Ts1 represents the first degree of superheat, T2b represents the evaporation outlet temperature value of the target indoor unit, T2 represents the temperature characteristic value of the evaporator coil of the target indoor unit, C1 represents the valve diameter of the throttling element of the target indoor unit, C2 represents the pipe length between the target indoor unit and the outdoor unit, SH represents the air blowing correction coefficient, H2 represents a value corresponding to the indoor humidity detected by the target indoor unit, Ca represents the correction coefficient corresponding to the gentle breeze mode, and Cb represents the correction coefficient corresponding to the anti-direct blowing mode.

The value of H2 is determined with reference to Table 3 below.

Table 3. Table of values corresponding to indoor humidity

| Temperature range | H2 value (recommended value) | H2 value (available range) |
|---|---|---|
| >75% | 3 | 2 to 6 |
| 60% to 75% | 2 | 1 to 3 |
| ≤60% | 1 | -1 to 2 |

The values of C1 and C2 may be determined with reference to Tables 4 and 5 below.

Table 4. Table of values of valve diameter of throttling element

| Diameter d of electronic expansion valve, mm | C1 (recommended value) | C1 (general range) |
|---|---|---|
| d≤1.3 | 1 | 0 to 1.5 |
| 1.3<d≤2.0 | 0 | -0.5 to 0.5 |
| d>2.0 | -1 | -1.5 to -0.5 |

Table 5. Table of values of pipe length

| Pipe length L, m | C2 (recommended value) | C2 (general range) |
|---|---|---|
| L>10 | 1 | 0-1.5 |
| 5<L≤10 | 0 | -0.5 to 0.5 |
| L≤5 | -1 | -1.5 to -0.5 |

The value of the pipe length may be set through DIP switch setting or in an engineering setting mode during installation of the multi-split air conditioning system. It can be understood that C2 may not only represent the value of the pipe length, but may also be a value corresponding to a combination of the pipe length and other installation information.

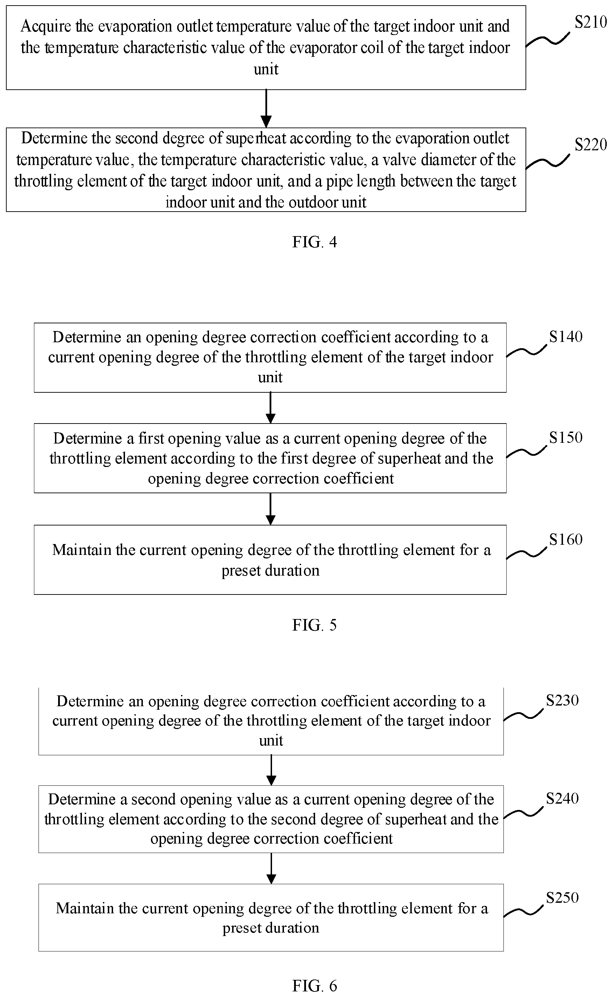

Referring to FIG. 4, the second degree of superheat of the target indoor unit is determined by executing the following steps.

In a step of S210, the evaporation outlet temperature value of the target indoor unit and the temperature characteristic value of the evaporator coil of the target indoor unit are acquired.

In a step of S220, the second degree of superheat is obtained according to the evaporation outlet temperature value, the temperature characteristic value, a valve diameter of the throttling element of the target indoor unit, and a pipe length between the target indoor unit and the outdoor unit.

For any target indoor unit, the evaporation outlet temperature value and the temperature characteristic value of the target indoor unit are acquired, and the second degree of superheat is calculated according to the evaporation outlet temperature value, the temperature characteristic value, the valve diameter of the throttling element, and the pipe length between the target indoor unit and the outdoor unit. For example, the second degree of superheat may be calculated according to the following formula:

$$Ts2 = T2b - T2 + C1 + C2$$

where Ts2 represents the second degree of superheat, T2b represents the evaporation outlet temperature value of the target indoor unit, T2 represents the temperature characteristic value of the evaporator coil of the target indoor unit, C1 represents the valve diameter of the throttling element of the target indoor unit, and C2 represents the pipe length between the target indoor unit and the outdoor unit.

The values of C1 and C2 may be determined with reference to Tables 6 and 7 below.

Table 6. Table of values of valve diameter of throttling element

| Diameter d of electronic expansion valve, mm | C1 (recommended value) | C1 (general range) |
|---|---|---|
| d≤1.3 | 1 | 0 to 1.5 |
| 1.3<d≤2.0 | 0 | -0.5 to 0.5 |
| d>2.0 | -1 | -1.5 to -0.5 |

Table 7. Table of values of pipe length

| Pipe length L, m | C2 (recommended value) | C2 (general range) |
|---|---|---|
| L>10 | 1 | 0 to 1.5 |
| 5<L≤10 | 0 | -0.5 to 0.5 |
| L≤5 | -1 | -1.5 to -0.5 |

The value of the pipe length may be set through DIP switch setting or in an engineering setting mode during installation of the multi-split air conditioning system. It can be understood that C2 may not only represent the value of the pipe length, but may also be a value corresponding to a combination of the pipe length and other installation information.

Referring to FIG. 5, adjusting an opening degree of a throttling element of the target indoor unit according to the first degree of superheat in S 100 may be implemented by executing the following steps.

In a step of S 140, an opening degree correction coefficient is determined according to a current opening degree of the throttling element of the target indoor unit.

In a step of S 150, a first opening value is determined as a current opening degree of the throttling element according to the first degree of superheat and the opening degree correction coefficient.

In a step of S 160, the current opening degree of the throttling element is maintained for a preset duration.

In this embodiment, during each adjustment, the opening degree of the throttling element is adjusted by an adjustment amount. The adjustment amount may be expressed by the following formula:

$$\Delta E = Ea * k$$

$$E = E + \Delta E$$

where $\Delta E$ represents the adjustment amount of the opening degree, $Ea$ represents values of an opening degree variation corresponding to different degree-of-superheat ranges, $k$ represents the opening degree correction coefficient and has different values corresponding to different current opening degrees, and $E$ represents the current opening degree. When the current opening degree $E$ of the throttling element is less than 160p, the value of $k$ is $k1=0.5$. When the current opening degree $E$ of the throttling element is greater than or equal to 160p, the value of $k$ is $k2=1.2$. The adjustment amount of the opening degree is calculated with reference to Table 8 below.

Table 8. Table of opening degree adjustment rules of throttling element corresponding to the first degree of superheat

| Degree of superheat Ts | Throttling element adjustment Ea | Adjustment time interval $\Delta t$ | Throttling element adjustment correction coefficient k1 | Throttling element adjustment correction coefficient k2 |
|---|---|---|---|---|
| Ts>3 | +16 | 20 | When the current opening degree E of the electronic expansion valve is less than 160P, k1 takes effect, and k1=0.5 | When the current opening degree E of the electronic expansion valve is greater than or equal to 160P, k2 takes effect, and k2=1.2 |
| 2≤Ts<3 | +10 | 40 | | |
| 1≤Ts<2 | +6 | 40 | | |
| 0.5≤Ts<1 | +4 | 60 | | |
| -0.5≤Ts<0.5 | 0 | 60 | | |
| -1≤Ts<-0.5 | -2 | 30 | | |
| -2≤Ts<-1 | -8 | 20 | | |
| Ts<-2 | -14 | 10 | | |

$\Delta t$ represents the preset duration. As can be seen from Table 8, different degree-of-superheat ranges correspond to different opening degree adjustment amounts and different preset durations. The preset duration represents a duration for which an opening degree obtained by adjusting the opening degree of the throttling element by the corresponding opening degree adjustment amount needs to be maintained. Only one of the opening degree correction coefficients k1 and k2 takes effect.

Referring to FIG. 6, adjusting an opening degree of a throttling element of the target indoor unit according to the second degree of superheat in S200 may be implemented by executing the following steps.

In a step of S230, an opening degree correction coefficient is determined according to a current opening degree of the throttling element of the target indoor unit.

In a step of S240, a second opening value is determined as a current opening degree of the throttling element according to the second degree of superheat and the opening degree correction coefficient.

In a step of S250, the current opening degree of the throttling element is maintained for a preset duration.

In this embodiment, during each adjustment, the opening degree of the throttling element is adjusted by an adjustment amount. The adjustment amount may be expressed by the following formula:

$$\Delta E=Ea*k$$

$$E=E+\Delta E$$

where $\Delta E$ represents the adjustment amount of the opening degree, Ea represents values of an opening degree variation corresponding to different degree-of-superheat ranges, k represents the opening degree correction coefficient and has different values corresponding to different current opening degrees, and E represents the current opening degree. When the current opening degree E of the throttling element is less than 160p, the value of k is k1=0.5. When the current opening degree E of the throttling element is greater than or equal to 160p, the value of k is k2=1.2. The adjustment amount of the opening degree is calculated with reference to Table 9 below.

Table 9. Table of opening degree adjustment rules of throttling element corresponding to the second degree of superheat

| Degree of superheat Ts | Throttling element adjustment Ea | Throttling time interval $\Delta t$ | Throttling element adjustment correction coefficient k1 | Throttling element adjustment correction coefficient k2 |
|---|---|---|---|---|
| Ts>3 | +16 | 20 | When the current opening degree E of the electronic expansion valve is less than 160P, k1 takes effect, and k1=0.5 | When the current opening degree E of the electronic expansion valve is greater than or equal to 160P, k2 takes effect, and k2=1.2 |
| 2≤Ts<3 | +10 | 40 | | |
| 1≤Ts<2 | +6 | 40 | | |
| 0.5≤Ts<1 | +4 | 60 | | |
| -0.5≤Ts<0.5 | 0 | 60 | | |
| -1≤Ts<-0.5 | -2 | 30 | | |
| -2≤Ts<-1 | -8 | 20 | | |
| Ts<-2 | -14 | 10 | | |

$\Delta t$ represents the preset duration. As can be seen from Table 9, different degree-of-superheat ranges correspond to different opening degree adjustment amounts and different preset durations. The preset duration represents a duration for which an opening degree obtained by adjusting the opening degree of the throttling element by the corresponding opening degree adjustment amount needs to be maintained. Only one of the opening degree correction coefficients k1 and k2 takes effect.

It should be noted that although the same numerical values are used in Tables 8 and 9 above, it does not mean that the opening degree adjustment methods corresponding to the first degree of superheat and the second degree of superheat are exactly the same, and the numerical values in Tables 8 and 9 may be set according to requirements in practice. Even if the same numerical values are used in Tables 8 and 9, the case where the preset condition is satisfied and the case where the preset condition is not satisfied respectively correspond to different control modes, because the first degree of superheat and the second degree of superheat are calculated according to different parameters.

Further, the throttling element may be an element such as a thermal expansion valve or an electronic expansion valve. An expansion valve is an important component in a refrigeration system, and is generally mounted between a condenser and an evaporator. A medium-temperature high-pressure liquid refrigerant undergoes a throttling process of the expansion valve to become a low-temperature low-pressure humid vapor. Then, the refrigerant absorbs heat in the evaporator to achieve a refrigeration effect. The flow rate of the expansion valve may be controlled according to the change in the degree of superheat at the end of the evaporator to prevent underutilization of evaporator area and cylinder knocking. In an embodiment of the present invention, an adjustment range may be set for the opening degree of the throttling element. A maximum opening degree of the throttling element may range from 350p to 450p, and a minimum opening degree may range from 60p to 120p. For example, the maximum opening degree is 400p, and the minimum opening degree is 80p. When the throttling element needs to be adjusted to the maximum opening degree or the minimum opening degree according to the first degree of superheat or the second degree of superheat, the opening degree is adjusted to the maximum opening degree or the minimum opening degree and maintained for the preset duration, after which degree-of-superheat calculation and opening degree adjustment are performed again.

It can be understood that the multi-split air conditioning system may also re-detect, based on a preset time interval, whether each indoor unit satisfies the preset condition, and perform degree-of-superheat calculation and opening degree adjustment according to S 100 or S200. The length of the preset time interval may be set according to requirements in practice, and is not limited herein.

The degree of superheat is controlled through two stages. In a first stage, the preset condition is not met. The first stage is an early stage of start-up of the multi-split air conditioning system, during which the multi-split air conditioning system has not reached a stable operating state. In the first stage, the opening degree of the throttling element is controlled according to the temperature characteristic value of the evaporator coil of the target indoor unit and the evaporation outlet temperature value. In a second stage, the preset condition is met, and the multi-split air conditioning system is in a stable operating state. In the second stage, the opening degree of the throttling element is controlled according to the temperature characteristic value, the evaporation outlet temperature value, and an air blowing correction parameter corresponding to the air blowing mode of the target indoor unit. The evaporation outlet temperature value is introduced as a parameter for controlling the opening degree, and the problem of deviation of the degree of superheat due to a long connecting pipe between the target indoor unit and the outdoor unit is considered. In addition, because the preset condition includes a judgment on the time for which the compressor has continuously operated, a judgment on the time for which the compressor has continuously been in a stable state, and a judgment on the evaporation temperature of the target indoor unit, an expansion valve of the target indoor unit can be separately controlled by comprehensively considering the operational status of the indoor unit and the operational status of the compressor, such that the multi-split air conditioning system can execute a precise control strategy even when the indoor units are respectively operating in a plurality of different modes, thereby improving user experience.

In addition, an embodiment of the present invention provides a controller, including a memory, a processor, and a computer program stored in the memory and executable by the processor, where the computer program, when executed by the processor, causes the processor to implement the method described above.

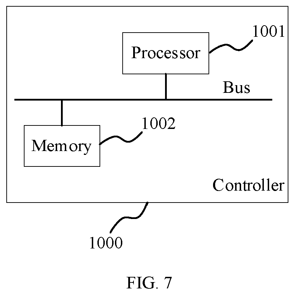

Referring to FIG. 7, for example, a control processor 1001 and a memory 1002 in a controller 1000 may be connected via a bus. The memory 1002, as a non-transitory computer-readable storage medium, may be configured for storing a non-transitory software program and a non-transitory computer-executable program. In addition, the memory 1002 may include a highspeed random access memory, and may also include a non-transitory memory, e.g., at least one magnetic disk storage device, flash memory device, or other non-transitory solid-state storage device. In some implementations, the memory 1002 optionally includes memories located remotely from the control processor 1001, and the remote memories may be connected to the controller 1000 via a network. Examples of the network include, but not limited to, the Internet, an intranet, a local area network, a mobile communication network, and combinations thereof.

Those having ordinary skills in the art may understand that the apparatus structure shown in FIG. 7 does not constitute a limitation to the controller 1000, and the controller 1000 may include more or fewer components than those shown in the figure, or some components may be combined, or a different component arrangement may be used.

In addition, an embodiment of the present invention provides a multi-split air conditioning system, including the controller 1000. The controller executes the method described above.

In addition, an embodiment of the present invention provides a computer-readable storage medium, storing computer-executable instructions configured for implementing the method described above. The computer-executable instructions, when executed by one or more processors, for example, by a processor 1001 in FIG. 7, may cause the one or more processors to implement the method in the above method embodiments, for example, implement the method steps S100 to S200 in FIG. 2, the method steps S110 to S130 in FIG. 3, the method steps S210 to S220 in FIG. 4, the method steps S140 to S160 in FIG. 5, or the method steps S230 to S250 in FIG. 6.

The apparatus embodiments described above are merely examples. The units described as separate components may or may not be physically separated, i.e., they may be located in one place or may be distributed over a plurality of network nodes. Some or all of the modules may be selected according to actual needs to achieve the objects of the scheme of this embodiment.

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer-readable storage medium (or non-transitory medium) and a communication medium (or transitory medium). As is known to those having ordinary skills in the art, the term "computer-readable storage medium" includes volatile and nonvolatile, removable and non-removable media implemented in any method or technology for storage of information (such as computer-readable instructions, data structures, program modules, or other data). The computer-readable storage medium includes, but not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

Although some implementations of the present invention have been described above, the present invention is not limited to the implementations described above. Those having ordinary skills in the art can make various equivalent modifications or replacements without departing from the scope of the present invention. Such equivalent modifications or replacements fall within the scope defined by the claims of the present invention.

**Claims**

1. A method for controlling a multi-split air conditioning system, wherein the multi-split air conditioning system comprises at least one target indoor unit with an air blowing mode turned on, the method comprising:

   in response to a preset condition being met, determining a first degree of superheat of the target indoor unit according to a temperature characteristic value of an evaporator coil of the target indoor unit, an evaporation outlet temperature value of the target indoor unit, and an air blowing correction coefficient, and adjusting an opening degree of a throttling element of the target indoor unit according to the first degree of superheat; and
   in response to the preset condition being not met, determining a second degree of superheat of the target indoor unit according to the temperature characteristic value of the evaporator coil of the target indoor unit and the evaporation outlet temperature value of the target indoor unit, and adjusting the opening degree of the throttling element of the target indoor unit according to the second degree of superheat,
   wherein the air blowing correction coefficient is related to the air blowing mode of the target indoor unit, and a temperature measurement point corresponding to the evaporation outlet temperature value is located on an outdoor unit side; and the preset condition comprises: a compressor of the multi-split air conditioning system has continuously operated for longer than a first preset time, the compressor has continuously been in a stable state for longer than a second preset time, and the temperature characteristic value of the target indoor unit is less than a target evaporation temperature of the target indoor unit.

2. The method of claim 1, wherein a first temperature sensor is arranged at a refrigerant pipeline between an evaporator of the target indoor unit and an air inlet of the compressor, and the first temperature sensor is located on the outdoor unit side to serve as a temperature measurement point to measure the evaporation outlet temperature value.

3. The method of claim 1, wherein the compressor being in the stable state comprises at least one of:

   a frequency fluctuation amplitude of the compressor being less than a preset amplitude; and
   an average value of temperature characteristic values of all indoor units having a capacity requirement being greater than the target evaporation temperature of the target indoor unit.

4. The method of claim 1, wherein the first degree of superheat is obtained in the following manner:

   acquiring the evaporation outlet temperature value of the target indoor unit, the temperature characteristic value of the evaporator coil of the target indoor unit, and an indoor humidity detected by the target indoor unit;
   determining the air blowing correction coefficient according to the indoor humidity and the air blowing mode of the target indoor unit; and
   determining the first degree of superheat according to the air blowing correction coefficient, the evaporation outlet temperature value, the temperature characteristic value, a valve diameter of the throttling element of the target indoor unit, and a pipe length between the target indoor unit and the outdoor unit.

5. The method of claim 1, wherein the second degree of superheat is obtained in the following manner:

   acquiring the evaporation outlet temperature value of the target indoor unit and the temperature characteristic value of the evaporator coil of the target indoor unit; and
   determining the second degree of superheat according to the evaporation outlet temperature value, the temperature characteristic value, a valve diameter of the throttling element of the target indoor unit, and a pipe length between the target indoor unit and the outdoor unit.

6. The method of claim 1, wherein adjusting an opening degree of a throttling element of the target indoor unit according to the first degree of superheat comprises:

determining an opening degree correction coefficient according to a current opening degree of the throttling element of the target indoor unit;

determining a first opening value as a current opening degree of the throttling element according to the first degree of superheat and the opening degree correction coefficient; and

maintaining the current opening degree of the throttling element for a preset duration.

7. The method of claim 1, wherein adjusting the opening degree of the throttling element of the target indoor unit according to the second degree of superheat comprises:

determining an opening degree correction coefficient according to a current opening degree of the throttling element of the target indoor unit;

determining a second opening value as a current opening degree of the throttling element according to the second degree of superheat and the opening degree correction coefficient; and

maintaining the current opening degree of the throttling element for a preset duration.

8. The method of any one of claims 1 to 7, wherein a second temperature sensor is arranged in a middle portion of an evaporator of the target indoor unit, and the second temperature sensor serves as a temperature measurement point to measure the temperature characteristic value.

9. The method of any one of claims 1 to 7, wherein the target evaporation temperature is determined according to a dew point temperature corresponding to the target indoor unit, an evaporation temperature correction coefficient, and the air blowing mode of the target indoor unit; and the dew point temperature is related to the indoor humidity detected by the target indoor unit and an indoor temperature.

10. The method of claim 1, further comprising:
re-detecting, based on a preset time interval, whether each indoor unit satisfies the preset condition.

11. A controller, comprising a memory, a processor, and a computer program stored in the memory and executable by the processor, wherein the computer program, when executed by the processor, causes the processor to perform the method of any one of claims 1 to 10.

12. A multi-split air conditioning system, comprising the controller of claim 11.

13. A computer-readable storage medium, storing a computer-executable instruction which, when executed by a processor, causes the processor to perform the method of any one of claims 1 to 10.

FIG. 1

During startup or operation of the multi-split air conditioning system

S100

When a preset condition is met, determine a first degree of superheat of the target indoor unit according to a temperature characteristic value of an evaporator coil of the target indoor unit, an evaporation outlet temperature value of the target indoor unit, and an air blowing correction coefficient, and adjust an opening degree of a throttling element of the target indoor unit according to the first degree of superheat

When the preset condition is not met, determine a second degree of superheat of the target indoor unit according to the temperature characteristic value of the evaporator coil of the target indoor unit and the evaporation outlet temperature value of the target indoor unit, and adjust the opening degree of the throttling element of the target indoor unit according to the second degree of superheat

S200

FIG. 2

Acquire the evaporation outlet temperature value of the target indoor unit, the temperature characteristic value of the evaporator coil of the target indoor unit, and an indoor humidity detected by the target indoor unit

S110

Determine the air blowing correction coefficient according to the indoor humidity and the air blowing mode of the target indoor unit

S120

Determine the first degree of superheat according to the air blowing correction coefficient, the evaporation outlet temperature value, the temperature characteristic value, a valve diameter of the throttling element of the target indoor unit, and a pipe length between the target indoor unit and the outdoor unit

S130

FIG. 3

Acquire the evaporation outlet temperature value of the target indoor unit and the temperature characteristic value of the evaporator coil of the target indoor unit ⟿ S210

Determine the second degree of superheat according to the evaporation outlet temperature value, the temperature characteristic value, a valve diameter of the throttling element of the target indoor unit, and a pipe length between the target indoor unit and the outdoor unit ⟿ S220

FIG. 4

Determine an opening degree correction coefficient according to a current opening degree of the throttling element of the target indoor unit ⟿ S140

Determine a first opening value as a current opening degree of the throttling element according to the first degree of superheat and the opening degree correction coefficient ⟿ S150

Maintain the current opening degree of the throttling element for a preset duration ⟿ S160

FIG. 5

Determine an opening degree correction coefficient according to a current opening degree of the throttling element of the target indoor unit ⟿ S230

Determine a second opening value as a current opening degree of the throttling element according to the second degree of superheat and the opening degree correction coefficient ⟿ S240

Maintain the current opening degree of the throttling element for a preset duration ⟿ S250

FIG. 6

FIG. 7

## INTERNATIONAL SEARCH REPORT

| International application No. |
|---|
| **PCT/CN2023/092765** |

**A. CLASSIFICATION OF SUBJECT MATTER**

F24F11/84(2018.01)i; F24F11/64(2018.01)i; F24F11/61(2018.01)i; F24F11/74(2018.01)i; F24F11/89(2018.01)i; F24F110/20(2018.01)i; F24F110/10(2018.01)i; F24F140/20(2018.01)i

According to International Patent Classification (IPC) or to both national classification and IPC

**B. FIELDS SEARCHED**

Minimum documentation searched (classification system followed by classification symbols)

IPC: F24F, F25B

Documentation searched other than minimum documentation to the extent that such documents are included in the fields searched

Electronic data base consulted during the international search (name of data base and, where practicable, search terms used)

CNTXT, ENTXTC, ENTXT, VEN, CNKI: 多联机, 一拖多, 风感, 柔风, 直吹, 无风, 避风, 微风, 弱风, 蒸发器, 过热度, 节流, 阀, 开度, multi-split, wind feel+, air feel+, overheat+, superheat+, throttl+, valve

**C. DOCUMENTS CONSIDERED TO BE RELEVANT**

| Category* | Citation of document, with indication, where appropriate, of the relevant passages | Relevant to claim No. |
|---|---|---|
| PX | CN 115235072 A (GUANGDONG MIDEA REFRIGERATION EQUIPMENT CO., LTD.) 25 October 2022 (2022-10-25)<br>description, paragraphs 4-34, and figures 1-7 | 1-13 |
| A | CN 113531857 A (GUANGDONG MIDEA REFRIGERATION EQUIPMENT CO., LTD.) 22 October 2021 (2021-10-22)<br>description, paragraphs 3-41, and figures 1-4 | 1-13 |
| A | CN 111664549 A (QINGDAO HISENSE HITACHI AIR CONDITIONING SYSTEM CO., LTD.) 15 September 2020 (2020-09-15)<br>entire document | 1-13 |
| A | CN 111912082 A (YOUTHWARE INTELLIGENT ENVIRONMENT (SHENZHEN) CO., LTD.) 10 November 2020 (2020-11-10)<br>entire document | 1-13 |
| A | CN 113531837 A (MIDEA GROUP WUHAN HVAC EQUIPMENT CO., LTD. et al.) 22 October 2021 (2021-10-22)<br>entire document | 1-13 |

☑ Further documents are listed in the continuation of Box C.    ☑ See patent family annex.

| | |
|---|---|
| *   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **10 August 2023** | **27 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/092765**

### C. DOCUMENTS CONSIDERED TO BE RELEVANT

| Category* | Citation of document, with indication, where appropriate, of the relevant passages | Relevant to claim No. |
|---|---|---|
| A | CN 1782581 A (LG ELECTRONICS (TIANJIN) ELECTRIC APPLIANCES CO., LTD.) 07 June 2006 (2006-06-07) entire document | 1-13 |
| A | JP 2008249288 A (MATSUSHITA ELECTRIC INDUSTRIAL CO., LTD.) 16 October 2008 (2008-10-16) entire document | 1-13 |
| A | JP S63282441 A (NIPPON DENSO CO., LTD.) 18 November 1988 (1988-11-18) entire document | 1-13 |
| A | WO 2018216131 A1 (TOSHIBA CARRIER CORP.) 29 November 2018 (2018-11-29) entire document | 1-13 |

Form PCT/ISA/210 (second sheet) (July 2022)

**INTERNATIONAL SEARCH REPORT**
Information on patent family members

International application No.

**PCT/CN2023/092765**

| Patent document cited in search report | | | Publication date (day/month/year) | Patent family member(s) | | | Publication date (day/month/year) |
|---|---|---|---|---|---|---|---|
| CN | 115235072 | A | 25 October 2022 | None | | | |
| CN | 113531857 | A | 22 October 2021 | None | | | |
| CN | 111664549 | A | 15 September 2020 | None | | | |
| CN | 111912082 | A | 10 November 2020 | None | | | |
| CN | 113531837 | A | 22 October 2021 | None | | | |
| CN | 1782581 | A | 07 June 2006 | None | | | |
| JP | 2008249288 | A | 16 October 2008 | None | | | |
| JP | S63282441 | A | 18 November 1988 | JPH | 086952 | B2 | 29 January 1996 |
| WO | 2018216131 | A1 | 29 November 2018 | JPWO | 2018216131 | A1 | 27 February 2020 |
| | | | | JP | 6847210 | B2 | 24 March 2021 |
| | | | | EP | 3633278 | A1 | 08 April 2020 |
| | | | | EP | 3633278 | A4 | 16 December 2020 |
| | | | | EP | 3633278 | B1 | 07 September 2022 |
| | | | | PL | 3633278 | T3 | 02 January 2023 |
| | | | | AU | 2017416002 | A1 | 19 December 2019 |
| | | | | AU | 2017416002 | B2 | 01 July 2021 |

Form PCT/ISA/210 (patent family annex) (July 2022)

**REFERENCES CITED IN THE DESCRIPTION**

**Patent documents cited in the description**

- CN 202210987656